# FASCICULE DE BREVET EUROPEEN

(11) **EP 3 766 325 B1**
(45) Date de publication et mention de la délivrance du brevet: **11.08.2021**
(21) Numéro de dépôt: 20182879.5
(22) Date de dépôt: 29.06.2020
(51) Int. Cl.: A01C 7/08, B65G 53/46, A01C 7/12

(54) **MACHINE AGRICOLE DE TYPE SEMOIR COMPRENANT UN DISPOSITIF D'INJECTION À ÉCLUSE**
LANDWIRTSCHAFTLICHE SÄMASCHINE, DIE EIN INJEKTIONSGERÄT MIT SCHLEUSE UMFASST
AGRICULTURAL MACHINE SUCH AS A SOWING MACHINE COMPRISING AN INJECTION DEVICE WITH GATE

(30) Priorité: 15.07.2019 FR 1907940
(43) Date de publication de la demande: 20.01.2021
(73) Titulaire: Burel Production, 35220 Chateaubourg (FR)
(72) Inventeur: CHEVALIER, Patrick, 35530 Noyal Sur Vilaine (FR); HAYOT, Mathieu, 35130 La Guerche de Bretagne (FR); LEVEILLE, Lionel, 35500 Vitre (FR)
(74) Mandataire: Vidon Brevets & Stratégie

(56) Documents cités:
- WO-A1-01/89968
- WO-A2-03/077635
- GB-A- 2 138 378
- US-A1- 2019 023 504

## Description

### Domaine technique

Le domaine de l'invention est celui du dosage et de la distribution de particules (graines, engrais, ...) pour semoir. Plus précisément, l'invention concerne une machine agricole de type semoir, reposant sur un transport pneumatique des particules, et comprenant un dispositif d'injection à écluse.

### Art antérieur

De manière classique, les machines agricoles de type semoir comprennent une trémie destinée à contenir des particules, et un dispositif de dosage, autrement appelé doseur.

Dans un tel doseur, les particules sont transférées par voie pneumatique à une tête de répartition et de distribution qui les projette dans un ensemble de tubulures flexibles connectées chacune à un soc semeur apte à déposer les graines en ligne sur le sol.

Dans de telles machines à transport pneumatique, on distingue les systèmes dits atmosphériques et les systèmes sous pression.

Les systèmes sous pression fonctionnent par la mise en œuvre d'un différentiel de pression entre l'entrée du produit dans le doseur et la sortie du produit vers la distribution.

Une difficulté de mise en œuvre de tels systèmes sous pression est qu'il faut s'assurer de la bonne étanchéité du système, principalement au niveau de l'entrée et de la sortie.

Pour leur part, les doseurs à transport pneumatique atmosphérique sont des systèmes fonctionnant à l'air libre.

Une difficulté de tels systèmes est qu'il s'avère relativement complexe de transporter des débits importants de graines sur de longues distances. En effet, le fait de transporter des graines sur une distance relativement importante nécessite de créer une aspiration suffisante pour attirer les graines vers la sortie.

Pour contrer ces inconvénients, et faciliter le transport des particules sur de plus longues distances, on peut envisager de placer un dispositif d'écluse, connu dans d'autres applications, entre le doseur et la canalisation de transport des particules vers la tête de distribution. Un tel dispositif d'écluse permet le passage des particules à semer, tout en assurant une étanchéité entre une première partie de la machine comprenant la trémie et le doseur, qui se trouve à la pression atmosphérique, et une deuxième partie sous pression comprenant la canalisation de transport des particules jusqu'à la tête de distribution.

Une telle écluse peut être formée d'une chambre, par exemple cylindrique, à l'intérieur de laquelle un rotor muni de pales est mobile en rotation : l'intervalle entre deux pales successives forme une cellule de transport des particules, du doseur vers la canalisation de transport. Une telle machine agricole, présentant les caractéristiques du préambule de la revendication 1, est connue du document WO 03/077635.

Toutefois, un inconvénient de telles écluses est que le taux de remplissage des cellules est fluctuant, notamment lorsque les particules s'écoulent par gravité du doseur vers le dispositif d'écluse. Il en résulte une certaine irrégularité de la distribution des particules, et donc des semis.

Un remplissage insuffisant des cellules du dispositif d'écluse peut en effet provoquer des trous de semis.

En outre, un excédent de particules dans une cellule peut entraîner, lors de la rotation du rotor, une remontée des graines en dehors de la cellule, ce qui peut provoquer un blocage ou un ralentissement de la rotation du rotor, et une augmentation du couple d'entraînement.

Il existe donc un besoin d'une machine agricole à base d'écluse qui présente une fiabilité accrue, et notamment qui présente un remplissage homogène des cellules de l'écluse.

Il existe également un besoin d'une telle machine agricole à base d'écluse qui facilite la distribution simultanée de plusieurs produits.

### Exposé de l'invention

L'invention répond à ces besoins en proposant une machine agricole de type semoir comprenant une trémie apte à contenir des particules, et un dispositif de dosage à la pression atmosphérique des particules disposé en aval de la trémie, et apte à délivrer des particules selon un dosage déterminé, la machine comprenant une canalisation de transport apte à transporter les particules sous une pression supérieure à la pression atmosphérique, par voie pneumatique, à une tête de répartition et de distribution, et un dispositif d'écluse apte à assurer une étanchéité entre le dispositif de dosage d'une part, et la canalisation de transport d'autre part, le dispositif d'écluse comprenant une chambre cylindrique dans laquelle un rotor à cellules, présentant une pluralité de pales s'étendant vers une paroi intérieure de la chambre, est mobile en rotation autour d'un arbre d'entraînement, la chambre cylindrique comprenant une ouverture d'entrée des particules apte à recevoir des particules en provenance du dispositif de dosage et une ouverture de sortie apte à délivrer les particules dans la canalisation de transport.

Selon l'invention, le dispositif d'écluse comprend, au niveau de l'ouverture d'entrée, un moyen d'arasement du contenu des cellules.

Ainsi, l'invention repose sur une approche tout à fait nouvelle et inventive de contrôle du dosage au sein d'une machine agricole à transport pneumatique comprenant un dispositif d'écluse.

En effet, l'invention propose de disposer, au niveau de l'ouverture d'entrée du dispositif d'écluse, un moyen d'arasement du contenu des cellules, qui permet d'assurer la régularité du taux de remplissage des cellules successives. Un tel moyen d'arasement permet de guider les particules vers les cellules, et d'assurer une certaine compacité des graines dans la cellule, et donc un remplissage suffisant de chacune des cellules. Ainsi, une telle invention permet qu'un utilisateur d'une telle machine agricole puisse semer de façon régulière. En outre, un tel moyen d'arasement évite toute remontée intempestive de graines en dehors des cellules, et réduit donc les risques que les graines viennent freiner la rotation de l'écluse ou obstruer son mécanisme.

Ainsi, selon un premier mode de réalisation de l'invention, le moyen d'arasement est un élément mobile entre une position de guidage des particules vers les cellules et une position d'arasement du contenu des cellules.

Selon une caractéristique particulière d'au moins un mode de réalisation de l'invention, le moyen d'arasement est une lèvre souple, par exemple en polyuréthane.

Une telle lèvre est simple d'utilisation et peu coûteuse ; elle peut être avantageusement précontrainte pour exercer naturellement une force d'appui sur les graines lors de la rotation du rotor.

Selon une autre caractéristique particulière d'au moins un mode de réalisation de l'invention, le moyen d'arasement est une brosse, de préférence à poils souples.

Selon encore une autre caractéristique particulière d'au moins un mode de réalisation de l'invention, une extrémité libre du moyen d'arasement vient en contact avec une extrémité distale des pales lors de la rotation du rotor.

De cette manière, lors de la rotation du rotor, l'arasement se fait par contact entre l'extrémité libre du moyen d'arasement et les particules qui sont situées dans la cellule entre deux pales. En outre, durant le remplissage, les particules sont guidées vers la cellule ciblée en limitant les pertes du fait qu'aucun espacement ne subsiste entre les pales et le moyen d'arasement.

Selon un deuxième mode de réalisation de l'invention, l'extrémité distale des pales est flexible et se déplace lors du contact avec l'extrémité libre du moyen d'arasement.

Ainsi, dans ce deuxième mode de réalisation, le moyen d'arasement peut consister en un élément rigide, qui vient en appui, lors de la rotation du rotor, sur l'extrémité flexible des pales.

Les premier et deuxième modes de réalisation peuvent avantageusement être combinés, en prévoyant que le moyen d'arasement soit mobile ou flexible, et que l'extrémité distale des pales soit également flexible.

Selon une autre caractéristique d'au moins un mode de réalisation, les pales sont inclinées par rapport à la direction radiale. On parle alors de pales décrochantes. Les pales peuvent ainsi fléchir aisément. En outre, par rapport à des pales radiales, la pression de contact entre les pales et la chambre cylindrique est diminuée. Cela permet de générer une contrainte plus faible et donc de diminuer le couple d'entraînement par rapport à des pales qui seraient radiales au diamètre.

Selon encore une autre caractéristique d'au moins un mode de réalisation, le dispositif d'écluse est disposé en aval du dispositif de dosage de telle sorte qu'une des pales, présente en entrée de l'ouverture d'entrée dans un sens de rotation du rotor, est sensiblement parallèle à un couloir d'écoulement des particules du dispositif de dosage vers le dispositif d'écluse.

De ce fait, l'écoulement des particules est simplifié. En effet, le dispositif d'écluse est ainsi disposé directement dans le flux d'écoulement des particules en sortie du doseur, ce qui permet d'optimiser le remplissage des cellules, notamment par rapport à une solution dans laquelle les graines tomberaient par gravité du doseur vers l'écluse. En outre, l'ensemble constitué du doseur et du dispositif d'écluse est alors compact, du fait de l'agencement relatif de ces deux éléments.

Selon un aspect particulier d'au moins un mode de réalisation de la machine agricole, dans laquelle le dispositif de dosage comprend un boîtier dans lequel est mobile en rotation un arbre de distribution rotatif présentant une pluralité de cannelures, une cellule du rotor à cellules présente un volume au moins égal à 130%, de préférence au moins égal à 175%, du volume d'une des cannelures.

Un tel ratio des volumes respectifs des cellules de l'écluse et des cannelures du doseur présente plusieurs avantages. Tout d'abord, il permet d'éviter toute compression excessive des particules dans les cellules de l'écluse, et donc toute détérioration des graines, notamment par écrasement.

Ensuite, ce ratio permet avantageusement de prévoir que le dispositif d'écluse soit alimenté en particules provenant de plusieurs doseurs distincts, associés à plusieurs trémies de la machine agricole. Ainsi, outre une trémie principale, il est possible de disposer sur la machine une ou plusieurs trémies additionnelles, et d'alimenter simultanément l'écluse de plusieurs produits à semer, par exemple des féveroles, du colza et de l'engrais. Le volume des cellules est ainsi suffisamment surdimensionné par rapport au volume des cannelures du doseur principal pour accueillir ces produits supplémentaires.

Enfin, une telle mise en œuvre permet également de diminuer le couple d'entraînement.

Selon un aspect d'au moins un mode de réalisation de l'invention, au niveau de l'ouverture de sortie, une paroi de la chambre cylindrique n'est pas parallèle à l'axe du arbre d'entraînement.

En d'autres termes, la paroi de la chambre cylindrique qui est en contact avec le flux d'écoulement des particules en sortie du dispositif d'écluse présente une direction dont la droite est sécante à l'axe de l'arbre d'entraînement. En d'autres termes encore, l'ouverture de sortie est biseautée, afin d'éviter que les particules ne tombent par paquets trop importants lorsqu'elles se déversent des cellules successives. On améliore ainsi la régularité du semis.

Selon une caractéristique d'au moins un mode de réalisation de l'invention, sur au moins un côté du dispositif d'écluse, une paroi latérale de la chambre cylindrique est décalée vers l'extérieur par rapport à une paroi latérale du boîtier du dispositif de dosage.

De ce fait, cela permet d'éviter les effets d'accumulation.

Selon encore une autre caractéristique d'au moins un mode de réalisation, la machine comprend, en amont du moyen d'arasement, des moyens d'introduction d'au moins un flux de particules secondaire, dans un couloir d'écoulement des particules du dispositif de dosage vers le dispositif d'écluse. Ceci est particulièrement avantageux pour la distribution simultanée de plusieurs produits, en provenance de plusieurs trémies, comme évoqué ci-avant.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue d'ensemble d'un tracteur tractant une machine agricole de type semoir ;
[Fig 2] illustre plus en détail une vue latérale du semoir 1 de [Fig 1] ;
[Fig 3A] propose une vue schématique en perspective d'une partie de machine agricole selon un mode de réalisation de l'invention ;
[Fig 3B] propose une vue en perspective détaillée de la partie de machine agricole illustrée par la figure 3A ;
[Fig 4] est une vue partielle en coupe d'un dispositif de dosage associé à un dispositif d'écluse selon un mode de réalisation de l'invention ;
[Fig 5] est une vue partielle en coupe d'un dispositif d'écluse selon un premier mode de réalisation de l'invention ;
[Fig 6] propose une vue latérale du dispositif d'écluse de la figure 4, et illustre plus particulièrement le principe d'inclinaison des pales ;
[Fig 7] propose une vue de l'une des pales de [Fig 6], présentant un bord chanfreiné ;
[Fig 8] est une vue en coupe illustrant plus particulièrement le positionnement relatif du dispositif de dosage et de l'écluse selon un mode de réalisation ;
[Fig 9] présente une vue en perspective d'une paroi de la chambre cylindrique du dispositif d'écluse selon un mode de réalisation ;
[Fig 10] est une autre vue en coupe illustrant le positionnement relatif du dispositif de dosage et de l'écluse selon un mode de réalisation ;
[Fig 11] est une vue en coupe du rotor du dispositif d'écluse selon un mode de réalisation de l'invention, définissant le volume d'une cellule ;
[Fig 12] est une vue partielle en coupe d'un dispositif d'écluse selon un deuxième mode de réalisation de l'invention ;
[Fig 13] est une vue partielle en coupe d'un dispositif d'écluse selon un troisième mode de réalisation de l'invention.

### Description détaillée de modes de réalisation de l'invention

Le principe général de l'invention repose sur la mise en œuvre, dans un dispositif d'écluse d'une machine agricole de type semoir, d'un moyen d'arasement du contenu des cellules de l'écluse, qui permet d'assurer un remplissage homogène et relativement compact des cellules et, par la suite, un semis sensiblement régulier.

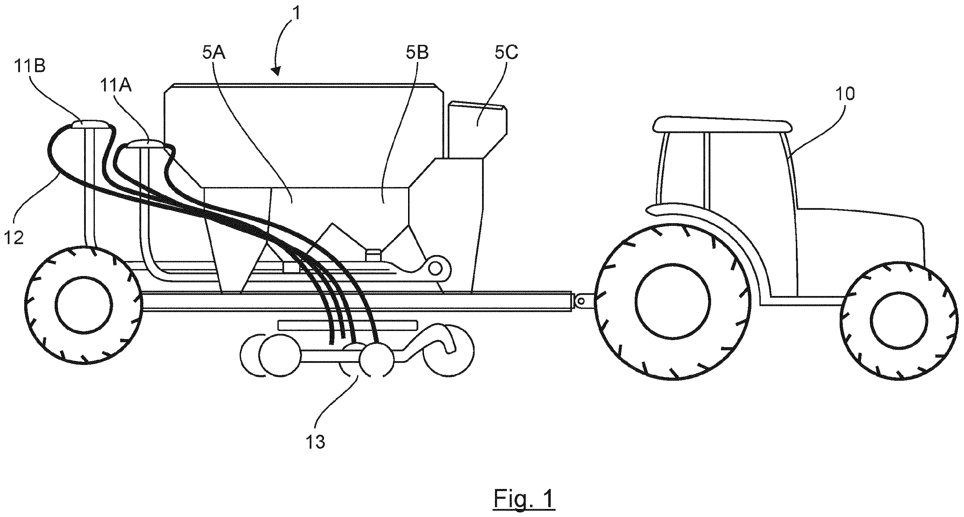

On présente désormais, en relation avec les figures 1 à 11, un mode de réalisation de la machine agricole de type semoir selon un mode de réalisation de l'invention.

[Fig 1] présente une vue d'ensemble d'un tracteur 10, tractant un semoir 1. Un tel semoir 1 comprend une ou plusieurs trémies 5 destinées à contenir des particules telles que des graines ou des particules d'engrais. Dans l'exemple particulier de [Fig 1], trois trémies sont illustrées, référencées 5A, 5B et 5C, équipées chacune d'un doseur électrique. Le semoir 1 est donc équipé de trois doseurs électriques en inox qui sont capables de passer de l'engrais, de la semence, des micro-granulés et de l'anti-limace. Un seul boîtier en cabine contrôle indépendamment chaque doseur. En sortie du doseur, les graines sont transférées par voie pneumatique à une tête de répartition et de distribution 11 qui les projette dans un ensemble de tubulures flexibles 12 connectées chacune à un soc semeur 13 apte à déposer les graines en ligne sur le sol.

Il est ainsi possible par exemple de semer, en un seul passage de la machine 1, du colza, des plantes compagnes et de l'engrais, ou du blé, du phosphore et de l'anti-limace, ou encore de l'avoine, des féveroles et du trèfle.

En outre, comme illustré sur [Fig 1], le semoir 1 peut présenter deux têtes de répartition 11A et 11B, alimentant deux lignes de semis distinctes. Par exemple, la trémie 5A est destinée à alimenter la tête de répartition 11A et la trémie 5B est destinée à alimenter la tête de répartition 11B.

La présente invention n'est bien sûr pas limitée à la présence de plusieurs trémies, mais s'applique également au cas où le semoir 1 ne compte qu'une trémie 5, et un doseur, alimentant une unique tête de répartition 11.

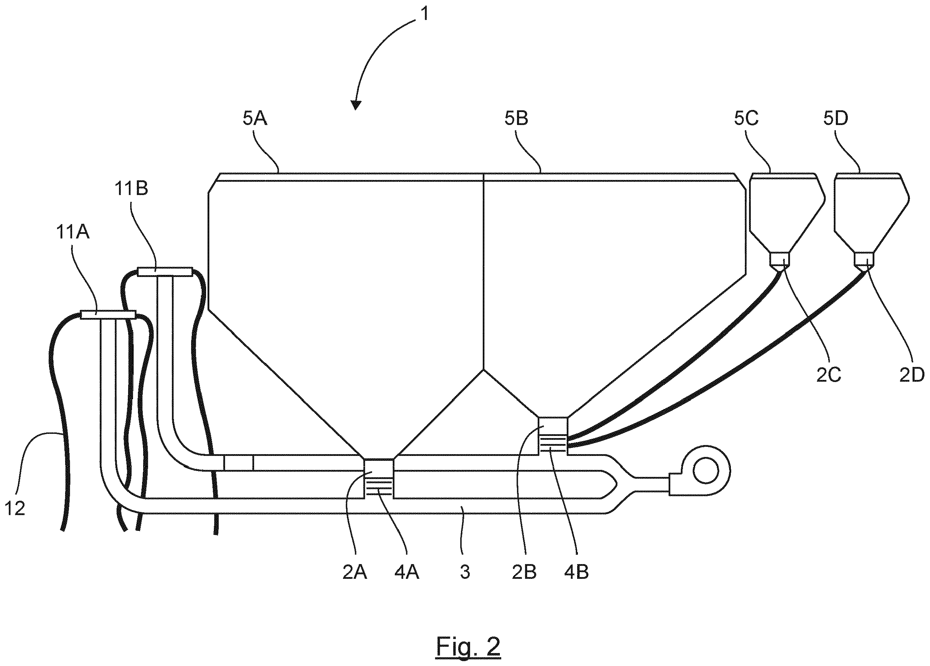

[Fig 2] illustre plus en détail une vue latérale du semoir 1 de [Fig 1]. La machine agricole 1 comprend quatre trémies 5A, 5B, 5C et 5D destinées à contenir des particules (par exemple des graines à semer). Chaque trémie est équipée d'un doseur 2 à la pression atmosphérique disposé en aval de cette dernière, qui permet de réguler le débit de distribution des particules dans une canalisation de transport 3. Cette canalisation de transport 3 permet de transporter les particules sous une pression supérieure à la pression atmosphérique, par voie pneumatique, à une tête 11 de répartition et de distribution.

Une telle tête de répartition et de distribution est connue en elle-même de l'art antérieur.

Par la pression, cette mise en œuvre d'une canalisation de transport au sein de la machine agricole 1 permet d'atteindre de plus grandes largeurs et débits pour le transport des particules, par rapport aux systèmes de transports dits atmosphériques.

La ou les trémie(s) 5A-5D peuvent, par exemple, prendre une forme tronconique partielle, avec une ouverture ménagée sur le haut pour leur remplissage.

En outre, selon le principe de la présente invention, dans ses différents modes de réalisation, on prévoit, dans le circuit de transport des particules des trémies vers les lignes de semis, un ou plusieurs dispositifs d'écluse, destinés à assurer une étanchéité entre les trémies d'une part, qui sont à la pression atmosphérique, et la canalisation de transport 3, qui est sous pression.

De tels dispositifs d'écluse sont avantageusement distincts des doseurs 2A-2D. Dans l'exemple de [Fig 2], on prévoit deux dispositifs d'écluse 4A et 4B, respectivement disposés en aval du doseur 2A de la trémie 5A et du doseur 2B de la trémie 5B. Le produit de la trémie 5C ou 5D peut, au choix de l'utilisateur, être injecté dans l'écluse 4A ou dans l'écluse 4B, pour rejoindre la tête de distribution 11A ou 11B. Ce choix peut être fait en fonction de la profondeur à laquelle l'utilisateur souhaite semer le produit de la trémie 5C ou 5D, à savoir la profondeur du produit de la trémie 5A ou la profondeur du produit de la trémie 5B. Dans l'exemple particulier illustré sur la [Fig 2], le produits des trémies 5C et 5D sont tous deux injectés dans l'écluse 4B de la trémie 5B.

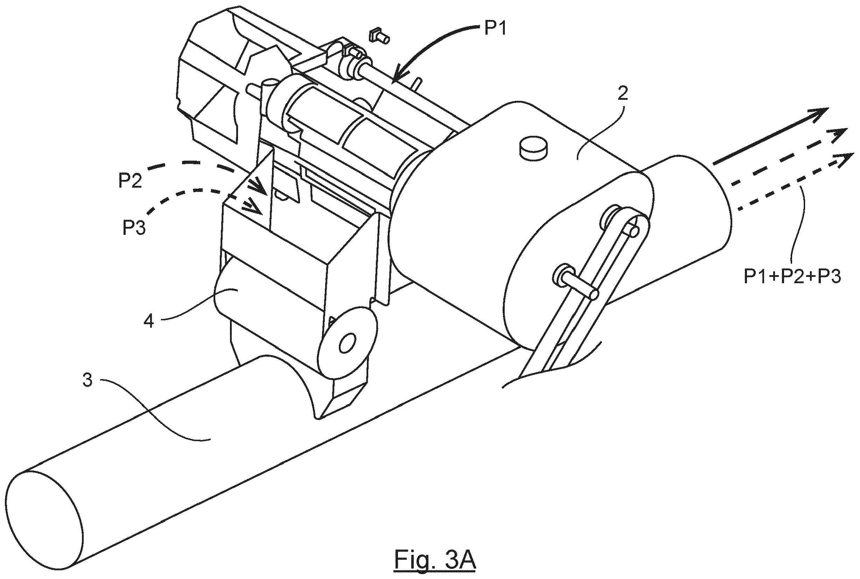

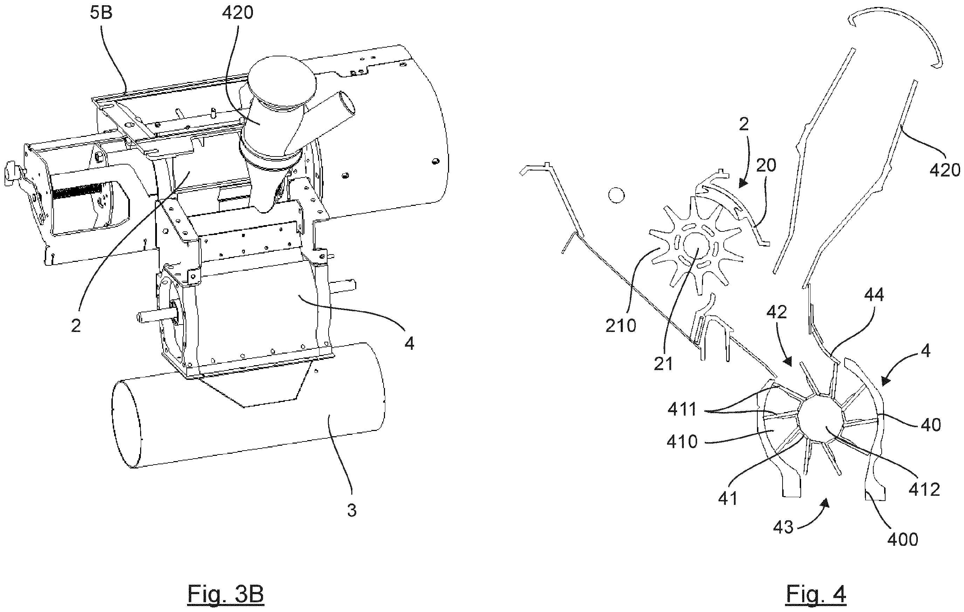

[Fig 3A] et [Fig 3B] illustrent plus particulièrement l'agencement du doseur 2 et de l'écluse 4 par rapport à la canalisation de transport 3. On considère dans cet exemple le doseur 2 situé en aval d'une trémie principale 5B du semoir 1, qui dose le produit principal à semer, par exemple P1. En sortie du doseur 2, le produit P1 traverse un dispositif d'écluse 4, pour rejoindre la canalisation de transport sous pression 3. En outre, les produits P2 ou P3 contenus dans des trémies annexes 5C ou 5D du semoir 1 peuvent également être injectés au niveau de l'écluse 4, de sorte que la canalisation de transport 3 transporte un mélange des graines P1 et P2, ou P1 et P3, ou encore P1, P2 et P3.

Le dispositif de dosage 2, illustré plus particulièrement en [Fig 4], comprend un boîtier 20 dans lequel est mobile en rotation un arbre 21 de distribution rotatif présentant une pluralité de cannelures 210.

Ces cannelures 210 permettent de doser des quantités de particules arrivant de la trémie.

Pour assurer une étanchéité entre le dispositif de dosage 2, qui fonctionne à la pression atmosphérique, et la canalisation de transport 3 qui fonctionne sous une pression supérieure à la pression atmosphérique, la machine agricole 1 comprend un dispositif d'écluse 4.

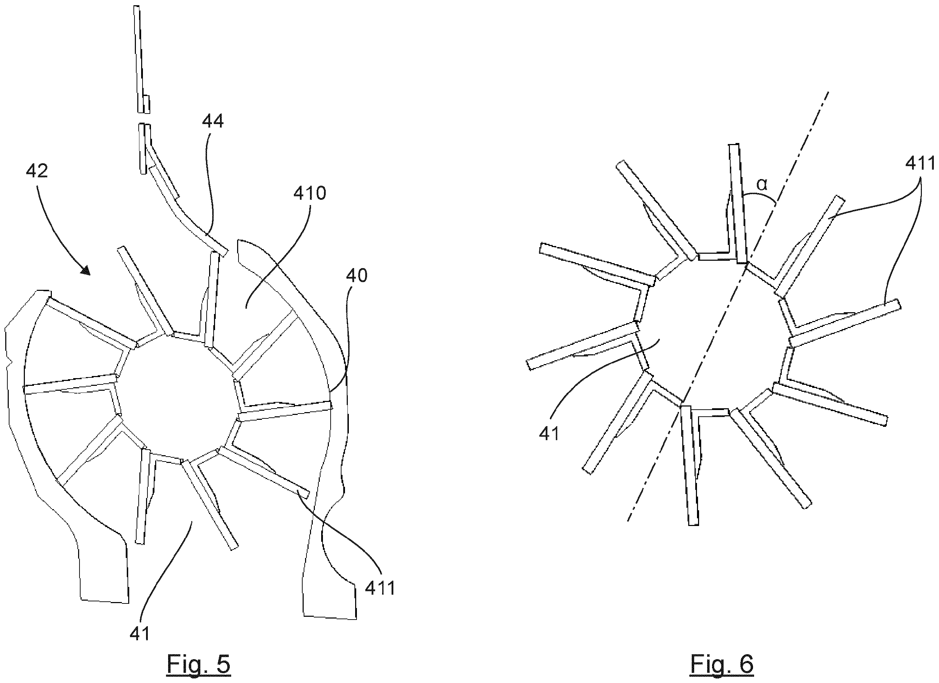

Comme plus particulièrement visible aux figures [Fig 4] et [Fig 5], ce dispositif d'écluse 4 comprend une chambre cylindrique 40 dans laquelle un rotor 41 est mobile en rotation autour d'un arbre d'entraînement 412.

Ce rotor peut, par exemple, être entraîné en rotation par l'intermédiaire d'un ou plusieurs moteurs accompagnés d'une ou plusieurs unités de commande électrique de ce ou ces moteurs. La transmission de puissance peut être faite par l'intermédiaire d'une courroie, si toutefois un seul moteur et une seule unité de commande électrique sont prévus pour le dispositif de dosage et pour le dispositif d'écluse.

Le rotor 41 est un rotor à cellules 410, présentant une pluralité de pales 411 s'étendant vers une paroi intérieure de la chambre cylindrique 40.

Une cellule correspond donc à l'espace clos délimité par deux pales, une portion de l'arbre d'entraînement 412, et les parois de la chambre cylindrique 40.

Selon un mode de réalisation de l'invention, et pour former un moyen de guidage pour les particules et ainsi assurer un remplissage suffisant et homogène de chacune des cellules, le dispositif d'écluse 4 comprend, au niveau de l'ouverture d'entrée 42, un moyen d'arasement 44 du contenu des cellules 410.

Ce moyen d'arasement 44 est ici un élément mobile entre une position de guidage des particules vers les cellules 410 et une position d'arasement du contenu des cellules 410.

En d'autres termes, lors de la rotation du rotor 41, et donc des pales 411, le moyen d'arasement 44 va venir guider les particules vers la cellule placée en vis-à-vis de l'ouverture d'entrée 42 puis, la rotation du rotor 41 continuant, le moyen d'arasement va venir araser le contenu de cette cellule de sorte à ce que les particules ne forment pas un amas trop important pour être contenues dans cette cellule.

De cette manière, la quantité de particules peut être régulièrement répartie entre les différentes cellules, et ce de façon compacte.

Dans le mode de réalisation présenté ici, et illustré plus particulièrement aux figures [Fig 4] et [Fig 5], l'élément d'arasement est ici une lèvre souple.

Bien évidemment, on pourrait prévoir d'autres modes de réalisation dans lesquels le moyen d'arasement serait une brosse.

On pourrait également prévoir d'autres modes de réalisation dans lesquels les moyens d'arasement comprennent un empilement de lèvres souples de sorte à avoir un double arasement du niveau de particules dans les cellules.

Pour que les particules arrivant du dispositif de dosage 2 soient guidées vers la cellule ciblée en limitant les pertes, une extrémité libre du moyen d'arasement 44 vient en contact avec une extrémité distale des pales 411 lors de la rotation du rotor.

En d'autres termes, le moyen d'arasement, ici une lèvre souple, vient recouvrir en partie la pale qui est en vis-à-vis durant la rotation du rotor ce qui assure le guidage des particules. Durant la rotation, la cellule pivote et le moyen d'arasement va venir araser, ou niveler, le contenu de la cellule.

Les pertes sont ainsi limitées du fait qu'aucun espacement ne subsiste entre les pales et le moyen d'arasement : les graines ne peuvent pas remonter hors des cellules, ni donc venir se coincer dans le mécanisme de rotation de l'écluse.

En outre, lors de la rotation du rotor 41, l'arasement se fait par contact entre l'extrémité libre du moyen d'arasement 44 et les particules qui sont situées dans la cellule comprise entre les deux pales 411.

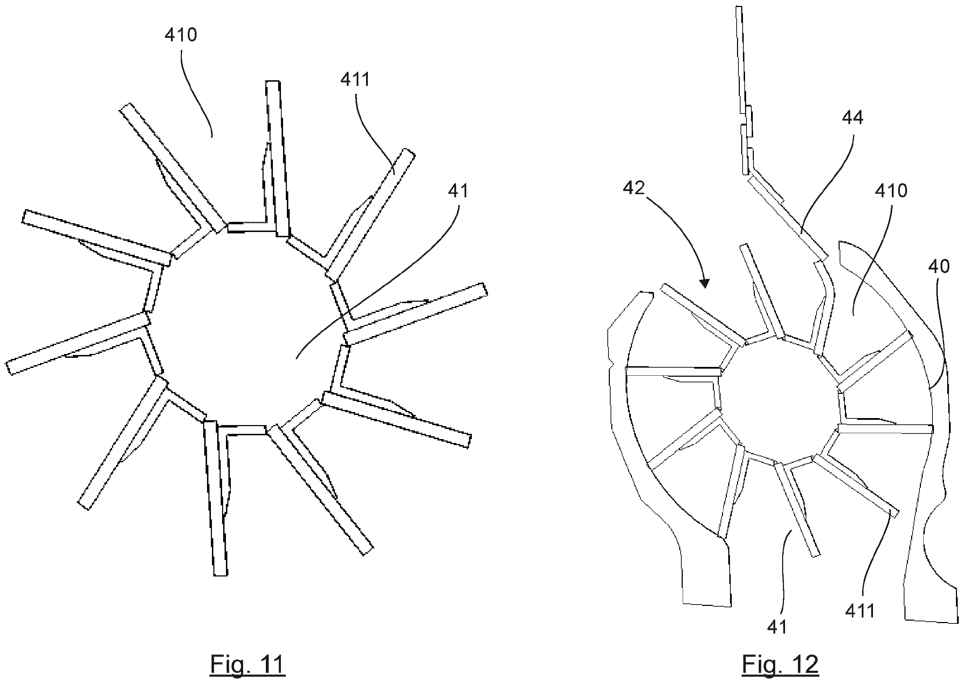

Dans un autre mode de réalisation, illustré en figure [Fig 12], le moyen d'arasement 44 est rigide et fixe (par exemple une lame inox). Les extrémités distales des pales 411 sont alors flexibles et fléchissent au contact de la lame 44.

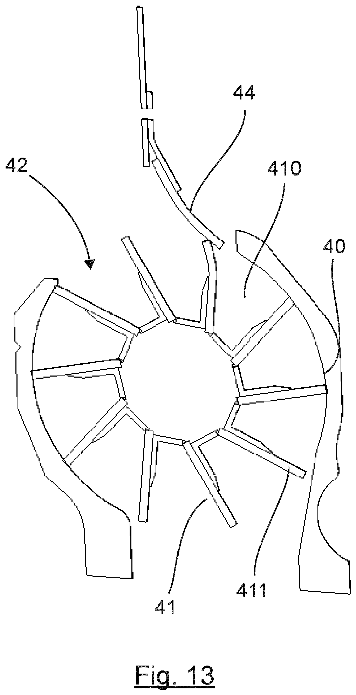

Dans encore un autre mode de réalisation, illustré en figure [Fig 13], les extrémités distales des pales 411 sont flexibles, et le moyen d'arasement 44 (par exemple une lèvre souple) est mobile entre une position de guidage et une position d'arasement.

Comme illustré en figure [Fig 6], les pales 411 sont, dans ce mode de réalisation, inclinées par rapport à la direction radiale : on parle de pales décrochantes. En d'autres termes, les pales 411 forment un angle α non nul par rapport à la direction radiale.

Le fait de mettre en œuvre de telles pales inclinées d'un angle α permet en effet de générer une contrainte de contact plus faible et donc diminuer le couple par rapport à des pales qui seraient radiales au diamètre.

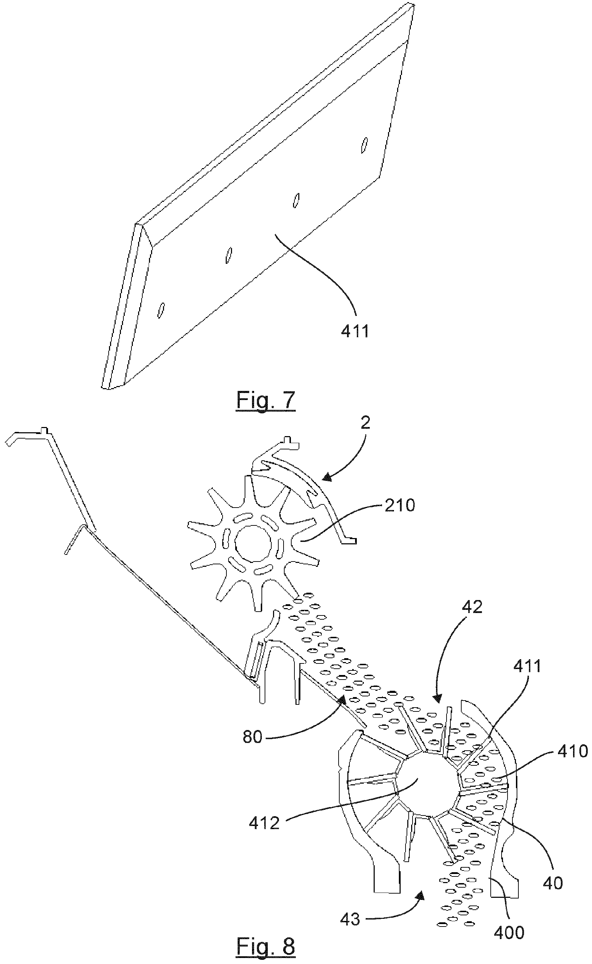

En outre, dans ce mode de réalisation, les bords de chacune des pales 411, en leur extrémité distale, sont chanfreinés, comme illustré en figure [Fig 7].

Un tel chanfrein présente l'avantage de donner de la souplesse pour d'éventuelles déformations dues à la rotation du rotor 41. En outre, cela abaisse la surface de contact, et donc les forces de contacts exercées entre la paroi de la chambre cylindrique 40 et chacune des pales 411.

Dans le mode de réalisation présenté, les pales 411 sont en polyuréthane, par exemple d'une dureté comprise entre 60Sh et 80Sh. Toutefois, dans une variante de ce mode de réalisation on pourrait également prévoir des pales qui soient dans un autre matériau, par exemple en caoutchouc, ou dans un autre matériau élastomère. Les pales détaillées ici présentent une épaisseur maximale sensiblement égale à 3mm.

La chambre cylindrique 40 comprend une ouverture d'entrée 42 des particules apte à recevoir des particules en provenance du dispositif de dosage 2 et une ouverture de sortie 43 apte à délivrer les particules sortant du dispositif d'écluse 4 dans la canalisation de transport 3.

Le dispositif de dosage 2, l'ouverture d'entrée 42, l'ouverture de sortie 43 et la canalisation de transport 3 sont ménagés de telle sorte que les particules suivent le chemin formé par ces éléments du fait de la gravité.

En outre, le dispositif d'écluse 4 est disposé en aval du dispositif de dosage 2 de telle sorte qu'une des pales 411, présente en entrée de l'ouverture d'entrée 42 dans un sens de rotation du rotor 41, est sensiblement parallèle à un couloir d'écoulement des particules du dispositif de dosage 2 vers ledit dispositif d'écluse 4.

Ceci est plus particulièrement illustré en figure [Fig 8].

De cette manière, le dispositif d'écluse 4 est directement placé dans le flux d'écoulement 80 des particules en provenance du doseur 2, et l'inclinaison des pales par rapport à la direction radiale leur permet de capter naturellement le flux de particules 80 : les particules tombant par gravité depuis le dispositif de dosage 2 vont s'écouler dans la cellule placée dans la continuité de l'ouverture d'entrée 42.

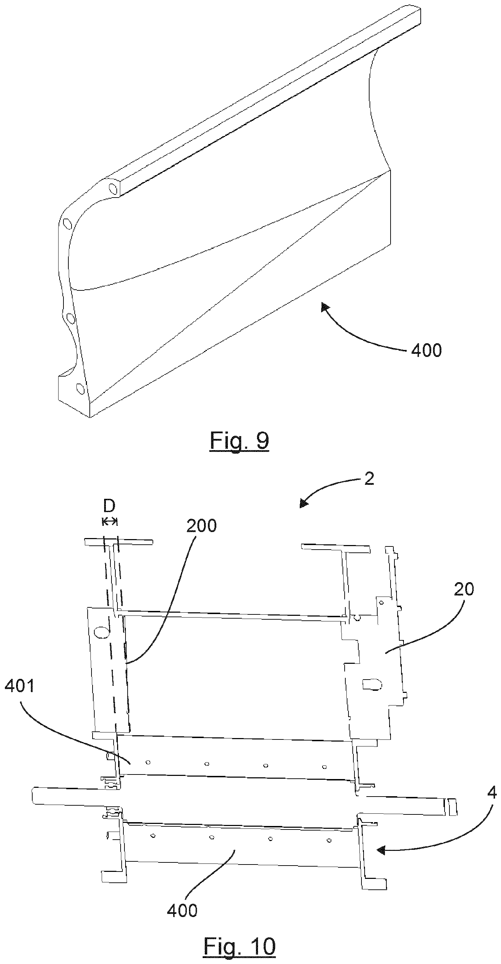

Par ailleurs, de sorte à éviter que les particules ne tombent par paquets au niveau de la canalisation de transport 3, une paroi 400 de la chambre cylindrique 40 située au niveau de l'ouverture de sortie 43 n'est pas parallèle à l'axe de l'arbre d'entraînement 412, comme illustré en figure [Fig 9].

En d'autres termes, l'ouverture de sortie 43 présente une forme biseautée avec la paroi 400, qui n'est pas parallèle à l'axe de l'arbre d'entrainement 412. Cette paroi 400 est la paroi de la chambre cylindrique avec laquelle les particules viennent en contact lors de leur écoulement en dehors de l'écluse. De cette manière, les particules sortant du dispositif d'écluse 4 ne se déversent pas par paquets, mais progressivement, ce qui améliore la régularité du transport vers la tête de distribution, et donc la régularité du semis.

De même, pour éviter l'effet d'accumulation et favoriser un écoulement plus fluide des particules, la machine agricole 1 selon le mode de réalisation présenté est constituée de telle sorte que sur au moins un côté du dispositif d'écluse 4, une paroi latérale 401 de la chambre cylindrique 40 est décalée vers l'extérieur de D par rapport à la paroi latérale 200 du boîtier 20 du dispositif de dosage 2. Un tel décalage de la paroi latérale 401 de la chambre cylindrique 40 par rapport à la paroi latérale 200 du boîtier est plus particulièrement illustré en figure [Fig 10]. Ainsi, sur son côté gauche, l'écluse 4 est élargie de D par rapport au doseur 2, ce qui permet de décompresser l'écoulement, en évitant l'accumulation de particules par frottement sur les parois.

Dans un mode de réalisation, plus particulièrement illustré en figure [Fig 11], une cellule 410 du rotor 41 à cellules présente un volume au moins égal à 175% du volume d'une des cannelures 210.

Selon une variante de ce mode de réalisation, une cellule du rotor à cellules présente un volume au moins égal à 130% du volume d'une des cannelures.

Cela permet que les particules qui arrivent dans le rotor depuis le dispositif de dosage ne soient pas compressées. Une telle mise en œuvre permet également, du fait que les particules ne sont pas compressées, de diminuer le couple d'entraînement car les particules frottent moins contre les parois de la chambre cylindrique 40.

Cela permet en outre qu'il soit ajouté d'autres produits, issus par exemple de trémies supplémentaires, de façon que l'écluse délivre directement un mélange de produits issus des différentes trémies.

Comme évoqué ci-avant en relation avec les figures [Fig 1] et [Fig 2], la mise en œuvre de plusieurs trémies permet en effet de conserver indépendamment les différentes particules à apporter (graines de plusieurs types, engrais, anti-limaces...). La machine selon un mode de réalisation de l'invention permet de les délivrer simultanément, dans un mélange unique. Elle permet de contrôler efficacement les quantités de particules de chaque produit arrivant dans le dispositif d'écluse 4, et de délivrer directement le mélange en sortie de ce dispositif d'écluse.

Une telle machine peut par exemple être utilisée pour la distribution simultanée de particules, par exemple de colza, de féveroles et d'engrais.

De manière à ajouter aux particules P1 issues de la première trémie 5B les autres types de particules P2 et P3 issus des trémies supplémentaires 5C et 5D comme prévu dans ce mode de réalisation, la machine agricole 1 comprend, en amont du moyen d'arasement 44, des moyens d'introduction 420 d'au moins un flux de particules secondaire, dans un couloir d'écoulement 80 des particules du dispositif de dosage 2 vers le dispositif d'écluse 4.

De tels moyens d'introduction peuvent, par exemple, se présenter sous la forme d'une tubulure 420 amenant les différentes particules secondaires délivrées par des doseurs 2C, 2D associés à chacune des trémies 5C et 5D, au niveau du dispositif d'écluse 4, en amont du moyen d'arasement, sensiblement perpendiculairement au plan d'amenée 430 du flux principal 80 de particules.

Une telle mise en œuvre permet de limiter le nombre de manipulations à effectuer pour un utilisateur, notamment en lui évitant de devoir changer les cannelures du dispositif de dosage.

Un autre avantage est qu'il n'est pas nécessaire de gérer de multiples écluses et donc de multiples étanchéités en fonction de la taille des particules utilisées et donc des moyens à utiliser pour doser les particules.

Il est à noter que l'ajout de particules issues de différentes trémies ne perturbe pas l'étanchéité de la machine agricole du fait que cette étanchéité est au niveau du dispositif d'écluse. Ainsi, les performances de transport pneumatique de la machine agricole ne sont pas impactées.

Cela permet en outre de ne pas nécessiter d'étanchéité complexe en amont du dispositif d'écluse.

Par ailleurs, cela permet d'utiliser des systèmes à trémie déjà existants et de les connecter, par le biais de moyens 420 d'introduction de flux de particules, dans un couloir d'écoulement 80 des particules du dispositif de dosage 2 vers le dispositif d'écluse 4, en amont de l'élément mobile 44.

Il est donc envisageable de faire évoluer simplement des machines agricoles existantes, par exemple des machines dites atmosphériques, de façon à les transformer en machine sous pression, en remplaçant un injecteur venturi classique par un dispositif d'injection à écluse selon un mode de réalisation de l'invention.

## Revendications

1. Machine agricole (1) de type semoir comprenant une trémie (5A, 5B) apte à contenir des particules, et un dispositif de dosage (2 ; 2A-2B) à la pression atmosphérique desdites particules disposé en aval de ladite trémie (5A, 5B), et apte à délivrer des particules selon un dosage déterminé,
ladite machine comprenant une canalisation de transport (3) apte à transporter lesdites particules sous une pression supérieure à ladite pression atmosphérique, par voie pneumatique, à une tête de répartition et de distribution, et un dispositif d'écluse (4 ; 4A, 4B) apte à assurer une étanchéité entre ledit dispositif de dosage (2 ; 2A, 2B) d'une part, et ladite canalisation de transport (3) d'autre part,
ledit dispositif d'écluse (4) comprenant une chambre cylindrique (40) dans laquelle un rotor (41) à cellules (410), présentant une pluralité de pales (411) s'étendant vers une paroi intérieure de ladite chambre (40), est mobile en rotation autour d'un arbre d'entraînement (412),
ladite chambre cylindrique (40) comprenant une ouverture d'entrée (42) des particules apte à recevoir des particules en provenance dudit dispositif de dosage (2) et une ouverture de sortie (43) apte à délivrer lesdites particules dans ladite canalisation de transport (3),
**caractérisée en ce que** ledit dispositif d'écluse (4) comprend, au niveau de ladite ouverture d'entrée (42), un moyen d'arasement (44) du contenu desdites cellules (410).

2. Machine agricole (1) selon la revendication 1, **caractérisée en ce que** ledit moyen d'arasement (44) est un élément mobile entre une position de guidage desdites particules vers lesdites cellules (410) et une position d'arasement du contenu desdites cellules (410).

3. Machine agricole (1) selon l'une quelconque des revendications 1 et 2, **caractérisée en ce que** ledit moyen d'arasement (44) est une lèvre souple.

4. Machine agricole (1) selon l'une quelconque des revendications 1 et 2, **caractérisée en ce que** ledit moyen d'arasement (44) est une brosse.

5. Machine agricole (1) selon l'une quelconque des revendications 1 à 4, **caractérisée en ce qu'**une extrémité libre dudit moyen d'arasement (44) vient en contact avec une extrémité distale desdites pales (411) lors de la rotation dudit rotor (41).

6. Machine agricole (1) selon la revendication 5, **caractérisée en ce que** ladite extrémité distale desdites pales (411) est flexible et fléchit lors du contact avec l'extrémité libre dudit moyen d'arasement (44).

7. Machine agricole (1) selon l'une quelconque des revendications 1 à 6, **caractérisée en ce que** lesdites pales (411) sont inclinées par rapport à la direction radiale.

8. Machine agricole (1) selon l'une quelconque des revendications 1 à 7, **caractérisée en ce que** ledit dispositif d'écluse (4) est disposé en aval dudit dispositif de dosage (2) de telle sorte qu'une desdites pales (411), présente en entrée de ladite ouverture d'entrée (42) dans un sens de rotation dudit rotor (41), est sensiblement parallèle à un couloir d'écoulement desdites particules dudit dispositif de dosage (2) vers ledit dispositif d'écluse (4).

9. Machine agricole (1) selon l'une quelconque des revendications 1 à 8, dans laquelle ledit dispositif de dosage (2) comprend un boîtier (20) dans lequel est mobile en rotation un arbre (21) de distribution rotatif présentant une pluralité de cannelures (210), **caractérisée en ce qu'une** cellule (410) dudit rotor (41) à cellules présente un volume au moins égal à 130%, de préférence au moins égal à 175%, du volume d'une desdites cannelures (210).

10. Machine agricole (1) selon l'une quelconque des revendications 1 à 9, **caractérisée en ce que,** au niveau de ladite ouverture de sortie (43), une paroi (400) de ladite chambre cylindrique (40) n'est pas parallèle à l'axe dudit arbre d'entraînement.

11. Machine agricole selon l'une quelconque des revendications 9 et 10, **caractérisée en ce que** sur au moins un côté dudit dispositif d'écluse, une paroi latérale (401) de ladite chambre cylindrique (40) est décalée vers l'extérieur par rapport à une paroi latérale (200) dudit boîtier (20) dudit dispositif de dosage (2).

12. Machine agricole selon l'une quelconque des revendications 1 à 11, **caractérisée en ce qu'**elle comprend, en amont dudit moyen d'arasement (44), des moyens d'introduction d'au moins un flux de particules secondaire, dans un couloir d'écoulement desdites particules dudit dispositif de dosage (2) vers ledit dispositif d'écluse (4).

## Patentansprüche

1. Landwirtschaftliche Maschine (1) des Typs Sämaschine, umfassend einen Trichter (5A, 5B), der Partikel enthalten kann, und eine Vorrichtung (2; 2A-2B) zur Dosierung der Partikel bei atmosphärischem Druck, die stromabwärts des Trichters (5A, 5B) angeordnet ist und Partikel gemäß einer bestimmten Dosierung abgeben kann, wobei die Maschine eine Förderleitung (3) umfasst, die die Partikel unter einem Druck, der größer als der atmosphärische Druck ist, pneumatisch zu einem Verteilungs- und Abgabekopf fördern kann, und eine Schleusenvorrichtung (4; 4A, 4B), die eine Abdichtung zwischen der Dosiervorrichtung (2; 2A, 2B) einerseits und der Förderleitung (3) andererseits gewährleisten kann,
wobei die Schleusenvorrichtung (4) eine zylindrische Kammer (40) umfasst, in der ein Rotor (41) mit Zellen (410), der mehrere Schaufeln (411) aufweist, die sich in Richtung einer Innenwand der Kammer (40) erstrecken, um eine Antriebswelle (412) drehbar ist, wobei die zylindrische Kammer (40) eine Partikeleinlassöffnung (42), die Partikel aus der Dosiervorrichtung (2) aufnehmen kann, und eine Auslassöffnung (43), die die Partikel in die Förderleitung (3) abgeben kann, umfasst,
**dadurch gekennzeichnet, dass** die Schleusenvorrichtung (4) im Bereich der Einlassöffnung (42) ein Mittel (44) zum Nivellieren des Inhalts der Zellen (410) umfasst.

2. Landwirtschaftliche Maschine (1) nach Anspruch 1, **dadurch gekennzeichnet, dass** das Nivelliermittel (44) ein Element ist, das zwischen einer Position zum Führen der Partikel in Richtung der Zellen (410) und einer Position zum Nivellieren des Inhalts der Zellen (410) beweglich ist.

3. Landwirtschaftliche Maschine (1) nach einem der Ansprüche 1 und 2, **dadurch gekennzeichnet, dass** das Nivelliermittel (44) eine weiche Lippe ist.

4. Landwirtschaftliche Maschine (1) nach einem der Ansprüche 1 und 2, **dadurch gekennzeichnet, dass** das Nivelliermittel (44) eine Bürste ist.

5. Landwirtschaftliche Maschine (1) nach einem der Ansprüche 1 bis 4, **dadurch gekennzeichnet, dass** ein freies Ende des Nivelliermittels (44) bei Drehung des Rotors (41) mit einem distalen Ende der Schaufeln (411) in Kontakt kommt.

6. Landwirtschaftliche Maschine (1) nach Anspruch 5, **dadurch gekennzeichnet, dass** das distale Ende der Schaufeln (411) flexibel ist und sich bei Kontakt mit dem freien Ende des Nivelliermittels (44) biegt.

7. Landwirtschaftliche Maschine (1) nach einem der Ansprüche 1 bis 6, **dadurch gekennzeichnet, dass** die Schaufeln (411) in Bezug auf die radiale Richtung geneigt sind.

8. Landwirtschaftliche Maschine (1) nach einem der Ansprüche 1 bis 7, **dadurch gekennzeichnet, dass** die Schleusenvorrichtung (4) stromabwärts der Dosiervorrichtung (2) so angeordnet ist, dass eine der Schaufeln (411) am Einlass der Einlassöffnung (42) in einer Drehrichtung des Rotors (41) im Wesentlichen parallel zu einem Strömungsweg der Partikel der Dosiervorrichtung (2) in Richtung der Schleusenvorrichtung (4) ist.

9. Landwirtschaftliche Maschine (1) nach einem der Ansprüche 1 bis 8, wobei die Dosiervorrichtung (2) ein Gehäuse (20) umfasst, in dem eine drehbare Verteilerwelle (21) drehbar ist, die mehrere Rillen (210) aufweist, **dadurch gekennzeichnet, dass** eine Zelle (410) des Zellenrotors (41) ein Volumen von mindestens gleich 130 %, vorzugsweise mindestens gleich 175 %, des Volumens einer der Rillen (210) aufweist.

10. Landwirtschaftliche Maschine (1) nach einem der Ansprüche 1 bis 9, **dadurch gekennzeichnet, dass** im Bereich der Auslassöffnung (43) eine Wand (400) der zylindrischen Kammer (40) nicht parallel zur Antriebswelle ist.

11. Landwirtschaftliche Maschine nach einem der Ansprüche 9 und 10, **dadurch gekennzeichnet, dass** auf zumindest einer Seite der Schleusenvorrichtung eine Seitenwand (401) der zylindrischen Kammer (40) gegenüber einer Seitenwand (200) des Gehäuses (20) der Dosiervorrichtung (2) nach außen versetzt ist.

12. Landwirtschaftliche Maschine nach einem der Ansprüche 1 bis 11, **dadurch gekennzeichnet, dass** sie stromaufwärts des Nivelliermittels (44) Mittel zum Einleiten zumindest eines sekundären Partikelstroms in einen Strömungsweg der Partikel der Dosiervorrichtung (2) in Richtung der Schleusenvorrichtung (4) umfasst.

## Claims

1. Agricultural machine (1) such as a sowing machine, comprising a hopper (5A, 5B) capable of containing particles and a device (2; 2A-2B) for metering the said particles at atmospheric pressure, which is arranged downstream of the said hopper (5A, 5B) and is capable of delivering particles in a determined amount,
the said machine comprising a transport pipe (3) capable of pneumatically transporting the said particles at a pressure higher than the said atmospheric pressure to a partition and distribution head, and a gate device (4; 4A, 4B) capable of establishing isolation between the said metering device (2; 2A-2B) on the one hand and the said transport pipe (3) on the other hand,
the said gate device (4) comprising a cylindrical chamber (40) in which a rotor (41) with cells (410), having a plurality of blades (411) extending towards an internal wall of the said chamber (40), can be moved in rotation about a drive shaft (412),
the said cylindrical chamber (40) comprising an entry opening (42) for the particles, which is capable of receiving particles coming from the said metering device (2), and an exit opening (43) which is capable of delivering the said particles into the said transport pipe (3),
**characterised in that** the said gate device (4) comprises, at said entry opening (42), a means (44) for levelling the content of the said cells (410).

2. Agricultural machine (1) according to Claim 1, **characterised in that** the said levelling means (44) is an element which can be moved between a position for guiding the said particles towards the said cells (410) and a position for levelling the content of the said cells (410).

3. Agricultural machine (1) according to either of Claims 1 and 2, **characterised in that** the levelling means (44) is a flexible lip.

4. Agricultural machine (1) according to either of Claims 1 and 2, **characterised in that** the levelling means (44) is a brush.

5. Agricultural machine (1) according to any one of Claims 1 to 4, **characterised in that** a free end of the said levelling means (44) comes in contact with a distal end of the said blades (411) during the rotation of the said rotor (41).

6. Agricultural machine (1) according to Claim 5, **characterised in that** the said distal end of the said blades (411) is flexible and bends during the contact with the free end of the said levelling means (44).

7. Agricultural machine (1) according to any one of Claims 1 to 6, **characterised in that** the said blades (411) are inclined with respect to the radial direction.

8. Agricultural machine (1) according to any one of Claims 1 to 7, **characterised in that** the said gate device (4) is arranged downstream of the said metering device (2) so that one of the said blades (411), which is present at the entry of the said entry opening (42) in a sense of rotation of the said rotor (41), is substantially parallel to a flow passage for the said particles from the said metering device (2) towards the said gate device (4).

9. Agricultural machine (1) according to any one of Claims 1 to 8, wherein the said metering device (2) comprises a casing (20) in which a rotary distribution shaft (21) having a plurality of grooves (210) can be moved in rotation, **characterised in that** a cell (410) of the said rotor (41) with cells has a volume at least equal to 130%, preferably at least equal to 175%, of the volume of one of the said grooves (210).

10. Agricultural machine (1) according to any one of Claims 1 to 9, **characterised in that,** at said exit opening (43), a wall (400) of the said cylindrical chamber (40) is not parallel to the axis of the said drive shaft.

11. Agricultural machine (1) according to either of Claims 9 and 10, **characterised in that,** on at least one side of the said gate device, a lateral wall (401) of the said cylindrical chamber (40) is offset outwards with respect to a lateral wall (200) of the said casing (20) of the said metering device (2).

12. Agricultural machine (1) according to any one of Claims 1 to 11, **characterised in that** it comprises, upstream of the said levelling means (44), means for introducing at least one secondary flow of particles into a flow passage for the said particles from the said metering device (2) towards the said gate device (4).
